Europäisches Patentamt

European Patent Office

Office européen des brevets

(19)

(11) EP 1 217 017 A1

(12) EUROPEAN PATENT APPLICATION

(43) Date of publication:
26.06.2002 Bulletin 2002/26

(51) Int Cl.$^7$: C08F 283/00

(21) Application number: 00204736.3

(22) Date of filing: 22.12.2000

(84) Designated Contracting States:
AT BE CH CY DE DK ES FI FR GB GR IE IT LI LU
MC NL PT SE TR
Designated Extension States:
AL LT LV MK RO SI

(71) Applicants:
• DSM N.V.
6411 TE Heerlen (NL)
• HILTI Aktiengesellschaft
9494 Schaan (LI)

(72) Inventors:
• Udding, Jan Henderikus
8016 AB Zwolle (NL)
• Wolters, Agnes Elisabeth
8055 PV Zuthem (NL)
• Wilhelm, Heinz
67454 Hassloch (DE)
• Pfeil, Armin
86916 Kaufering (DE)
• Bürgel, Thomas
86899 Landsberg (DE)
• Sager, Lutz
86937 Scheuring (DE)

(54) **Resin mortars for chemical fastening**

(57) The invention relates to radically curable resin mortars, containing unsaturated polyester and a reactive diluent, for use as A-component in two-component (+ B-component containing peroxide and possibly an extender) for chemical fastening systems, wherein the diluent in the A-component is either a monomeric component according to formula 1

$$(A\text{-}CH\text{=}CH\text{-}O)_n\text{-}R \qquad \text{(formula 1)}$$

or a resinous compound, in which a monomeric component having vinyl ether group(s) has been built-in covalently, and the content of the component containing one or more vinyl ether group(s) being from 0.5 to 50 wt.%, calculated (as indicated) as weight percentage relative to the resin composition. A, R and n are specified as hydrogen or $C_{1-3}$ alkyl; $C_{1-20}$ (hetero)-aliphatic with hydroxyl or amino groups, or poly($C_{2 \text{ or } 3}$)glycol with 2-10 glycol units; and 1 to 4, respectively.

The resinous compounds with buit-in vinyl ether group(s) (0.5 to 50 wt.%, calculated as indicated).are obtained by reaction of a mixture of appropriate amounts of:

a) a first compound (HVE) containing hydroxyl group(s) and at least one vinyl ether group, and
b) a second compound (D/HIC), being an isocyanate; and
c) a third compound (G/P/HP) from (1) $C_{2-6}$ glycols, (2) $C_{5-20}$ polyols having 2-5 hydroxyl groups and (3) hydroxyl terminated polyester compounds, not being alkyd resins, having 1-5 free hydroxyl groups and 2-50 monomeric units, or mixtures thereof.

The invention also relates to two-component chemical fastening systems comprising such curable mortar and a B-component, as well as to methods of preparing such mortars and use thereof for chemical fastening.

**Description**

This invention relates to radically curable resin mortars, containing an unsaturated polyester and a reactive diluent, and optionally an accelerator, for use as the first component (A-component) in two-component (A-component + B-component) chemical fastening systems, the B-component containing a peroxide and possibly an extender for the peroxide.

For proper distinction between the (reactive) diluent for the A-component and the component with a diluting function in the B-component (in fact also a diluent), respectively, the latter one is referred to in the present application as extender.

The invention also relates to two-component chemical fastening systems comprising such radically curable resin mortar and a B-component, as well as to methods of preparing such radically curable resin mortars, and to the use of such mortars or two-component systems in processes for chemical fastening. Over the last years, radically curable resin mortars, especially as one of the components in two-component systems for chemical fastening, have become more and more important for the fastening of dowels, rock bolts, screw anchors, etc. in boreholes.

As used herein, the term "two-component system" refers to systems where two separate components (A and B) are being spatially separated from each other, for instance in separate cartridges or the like, and is intended to include any system wherein each of such two separate components (A and B) may consist of further separate components. The components are combined at the time the system is used for the chemical fastening. The total of A- and B-components may also be referred to as the "resin composition" to be used for the chemical fastening.

The A-component in commonly used resin mortars (also called chemical mortars) generally consists of unsaturated polyesters. The term "unsaturated polyester" (resins) as meant herein also includes vinyl ester, vinyl ester urethane and mixtures thereof. In fact, these unsaturated resins as used in the A-component may be considered to be prepolymers (which lateron will undergo further polymerisation during the curing (i.e. fastening) reaction.

The B-component is the component, which contains the peroxide compound needed for initiating the curing reaction after mixing together the A- and B-components.

Because these unsaturated polyester (prepolymer) materials,as used in the A-component, are usually solid or highly viscous (at the temperature level where they are to be used for the chemical fastening), they have to be dissolved in or diluted with styrene (as, for instance is described in DE-3226602-A1 or EP-A-0432087). Styrene at the same time has the advantage of being reactive (by co-polymerisation) as the resin of the A-component is being radically cured upon mixing with the B-component (which usually contains a peroxide). Solvents like styrene, however, are quite undesirable because of their poor smelling and hazardous properties. It therefore has been attempted in the past to substitute styrene as solvent and reactive diluent by methacrylates (see, for instance, EP-A-0534197, EP-A-0534201 or EP-A-0591803) or to use epoxy or isocyanate monomers as reactive diluents (see WO 94/19397).

Alternatively (see DE-4231161-A1) in recent years styrene-free hybrid systems have been formulated wherein the unsaturated polyester resins are diluted by methacrylic monomers and wherein an inorganic, hydraulically (i.e. under the influence of water) hardening, cement is added to react with the water used for diluting the peroxide in the B-component.

However, all of the chemical mortars known thusfar suffer from a number of serious disadvantages: in particular curing (chemical fastening) under unfavourable conditions, especially at relatively low temperatures (e.g. in the range of —20 to +40°C) is difficult (or even impossible below 0°C when water is present) and considered to be not completely adequate. This is in part because inhibition of the polymerisation of the resin occurs at the surface of the mortar under the influence of oxygen. Moreover, the curing often will be incomplete, for instance because of the relatively low reactivity of the reactive diluent used, and shrinkage is high due to hydratation of the cement. As a result the mechanical properties of the chemical fastened mortars, for instance when fastening anchor bolts in boreholes, may lead to insufficient pull-out values. This is most apparent when the fastening has to be done under unfavourable low temperature conditions. Moreover, such insufficient properties also often come to light when it is attempted to perform the chemical fastening in boreholes having very smooth surfaces such as the ones drilled with the aid of a diamond borer.

The aim of the present invention therefore was to provide an alternative and improved radically curable chemical mortar, which is able to outperform the chemical mortars of the prior art, especially as to ease of handling under unfavourable conditions, as to completeness of curing and as to the mechanical properties of the final chemically fastened mortars.

Surprisingly it now has been found, that this aim of providing radically curable resin mortars, containing an unsaturated polyester and a reactive diluent, and optionally an accelerator, for use as the first component (A-component) in two-component (A-component + B-component) chemical fastening systems is achieved in that the reactive diluent for the unsaturated polyester in the A-component is

* a monomeric component containing one or more vinyl ether group(s) and having a structure according to formula 1

$$(A-CH=CH-O)_n-R \qquad \text{(formula 1)}$$

\*    or is a suitable resinous compound, in which a monomeric component containing one or more vinyl ether group(s) has been built-in covalently,

and the content of the component containing one or more vinyl ether group(s) is from 0.5 to 50 wt.%, calculated as the weight percentage of said monomeric component relative to the total weight of the resin composition (sum of weights of A-component + B-component, excluding the weight of additives, fillers and the like).

As meant herein, in the A-component the content of the component containing one or more vinyl ether group(s) is in the range of from 0.5 to 50 wt.%, when being calculated as the weight percentage of said monomeric component (whether used as such, or being covalently built-in into a resinous compound) relative to the total weight of the resin composition. The total weights of the A-component + B-component, however with the exclusion of any additives, fillers and the like, which also may be present in the A- and/or B-components, is referred to as the resin composition.

As the unsaturated polyesters (prepolymers) in the A-component all commonly known (prepolymers of) unsaturated polyesters, vinyl esters or a vinyl ester urethanes or mixtures thereof can be used. These prepolymers usually have an average molar weight of 250 to 5000 g/mol; preferably 500 to 3500 g/mol. Such unsaturated prepolymers and their preparation are well-known to the skilled man. See, for instance, G. Pritchard (Ed.), Development in Reinforced Plastics 1 (1980), Applied Science Publishers Ltd., London, pp. 64 — 67 (unsaturated polyesters) and pp. 29 — 58 (vinyl esters); or US-A-3876726 (vinyl ester urethanes).

The (monomeric) components containing one or more vinyl ether group(s) according to formula 1, which suitably can be used as reactive diluent for the A-component in the present invention, are vinyl ether monomers of the structure

$$(A-CH=CH-O)_n-R \qquad \text{(formula 1)}$$

where

A    represents hydrogen or an alkyl group with 1-3 C atoms, and where, if there is more than one A, the individual A groups may be the same or different

R    either represents an aliphatic group, optionally branched, with 1-20 C atoms, which may also contain a cyclohexyl or a 1,4-dimethylenecyclohexyl group and in the carbon chain optionally also one or more O and/or S atoms, which group may be substituted with one or more functional group(s) chosen from either a hydroxyl group or an amino group, optionally substituted with one or two alkyl groups with 1-3 C atoms,

   or represents a polyethylene glycol or a polypropylene glycol with an average chain length of between 2 and 10 glycol units, optionally with an aliphatic group with 1-5 C atoms attached to the chain's free hydroxyl group and

n    is 1, 2, 3 or 4.

Also mixtures of the vinyl ethers of the general structure of formula 1 may be used.

These vinyl ethers are commercially available. The following compounds are examples of monomeric vinyl ethers suitable for use in the radically curable mortars according to the invention:

$$n = 1$$

3-aminopropyl vinyl ether, t-amyl vinyl ether, butyl vinyl ether, cyclohexanedimethanol monovinyl ether, cyclohexyl vinyl ether, 3-diethyl aminopropyl vinyl ether, diethylene glycol monovinyl ether, dodecyl vinyl ether, ethylene glycol butyl vinyl ether, ethylene glycol monovinyl ether, 2-ethylhexyl vinyl ether, ethyl vinyl ether, hexanediol monovinyl ether, hydroxy butylvinyl ether, methyl vinyl ether, octadecyl vinyl ether, polyethylene glycol methyl vinyl ether, triethylene glycol methyl vinyl ether;

$$n = 2$$

butanediol divinyl ether, cyclohexane dimethanol divinylether, diethylene glycol divinyl ether, dipropylene glycol divinyl ether, ethylene glycol divinyl ether, hexanediol divinyl ether, neopentyl glycol divinyl ether, tetraethylene glycol divinyl ether, triethylene glycol divinyl ether, tripropylene glycol divinyl ether, linear or branched prepolymer vinyl esters or vinyl ester urethanes terminated by vinyl ether functions;

n = 3 or 4

trimethylolpropane trivinyl ether, pentaerythritol tetravinyl ether.

Preferably, the extender is a vinyl ether monomer are selected from the group of mono- or divinyl ether monomers, for instance: butanediol divinyl ether, butyl vinyl ether, cyclohexanedimethanol divinyl ether, cyclohexanedimethanol monovinyl ether, diethylene glycol divinyl ether, ethylene glycol divinyl ether, 2-ethylhexyl divinyl ether, ethyl vinyl ether, hexanediol divinyl ether, hydroxybutyl vinyl ether, methyl vinyl ether, triethylene glycol divinyl ether, and triethylene glycol methyl vinyl ether.

Most preferably, the vinyl ether is selected from the group of hydroxybutyl vinyl ether (HBUVE), diethyleneglycol divinyl ether (DEGDVE) or triethyleneglycol divinyl ether (TEGDVE).

The resinous compounds, in which a monomeric component containing one or more vinyl ether group(s) has been built-in covalently, and which can be used suitably in the present invention, preferably have been obtained by reaction of a mixture of appropriate amounts of:

a) a first compound (the HVE-compound) containing at least one hydroxyl group and at least one vinyl ether group, and

b) a second compound (the D/HIC-compound), being a diisocyanate (or higher isocyanate), reacting with formation of one or more urethane group(s), and

c) a third compound (the G/P/HP-compound) chosen from the groups of (1) $C_{2-6}$ glycols, (2) $C_{5-20}$ polyols having 2-5 hydroxyl groups and (3) saturated or (ethylenically) unsaturated hydroxyl terminated polyester compounds, not being alkyd resins, having 1-5 free hydroxyl groups and from 2-50 monomeric ester units (the G/P/HP-compound), or mixtures thereof,

the content of vinyl ether groups in the resinous compound being from 0.5 to 50 wt.%, calculated as the weight percentage of the HVE-compound relative to the total weight of said resinous compound.

All those components according to formula 1, which contain at least one hydroxyl group, are suitable as HVE-compounds, with the proviso, however, that if - in compounds according to formula 1 - R represents a polyethylene or polypropylene glycol with an average chain length of between 2 and 10 glycol units, then no aliphatic group with 1-5 C atoms is attached to the chain's free hydroxyl group.

Examples of HVE-compounds in the resinous component with covalently built-in vinyl ether groups, which suitably can be used as diluent for peroxides are hydroxy vinyl ethers or amino vinyl ethers: 3-aminopropyl vinyl ether, cyclohexanedimethanol monovinyl ether, diethylene glycol monovinyl ether, ethylene glycol monovinyl ether, hexanediol monovinyl ether, hydroxybutyl vinyl ether.

Preferably, the HVE-compound is a selected from the group of hydroxy monovinyl ethers, for instance: cyclohexanedimethanol monovinyl ether, hydroxybutyl vinyl ether. Most preferably, the vinyl ether monomer is hydroxybutyl vinyl ether (HBUVE)

The molecular weight of the vinyl ether monomers usually will be in the range of from 70 to 1000; the molecular weight of the vinyl ether group(s) containing components where the vinyl ether group(s) is/are covalently built-in into a suitable resinous compound will usually be in the range of 500 to 5000; such components having a molecular weight lower, respectively higher than 1500 also may be called oligomers, respectively polymers.

The diisocyanate or higher isocyanate (D/HIC) compound as used in the context of the present invention may be any (linear, branched or cyclic) aliphatic and/or aromatic diisocyanate or higher isocyanate, or prepolymers thereof. Specifically suitable D/HIC compounds are, for instance, toluene diisocyanate (TDI), diphenylmethane diisocyanate (MDI), hexane diisocyanate (HDI), isophoron diisocyanate (IPDI) and isocyanurates.

The G/P/HP-compounds as used in the context of the present invention can suitably be chosen from the groups of (1) $C_{2-6}$ glycols, (2) $C_{5-20}$ polyols having 2-5 hydroxyl groups and (3) saturated or (ethylenically) unsaturated hydroxyl terminated polyester compounds, not being alkyd resins, having 1-5 free hydroxyl groups and from 2-50 monomeric ester units. Suitable glycols, for instance, are (mono-, di- or tri-) ethylene glycol or propylene glycol, 1,4-butanediol, 1,6-hexanediol, 1,4-cyclohexanediol. Suitable $C_{5-20}$ polyols having 2-5 hydroxyl groups, for instance, are pentaerythritol, neopentyl glycol, glycerine, trimethylolpropane, hexanetriol, bisphenol-A and ethoxylated derivatives thereof, sorbitol, 1,4-cyclohexane dimethanol, 1,2-bis(hydroxyethyl)cyclohexane. Suitable saturated or (ethylenically) unsaturated hydroxyl terminated polyester compounds, for instance, are chosen from the group of dihydroxy(meth) acrylates and other (meth)acrylic esters of alcohols having 1-12 C-atoms, 2,2-dimethyl-3-hydroxypropyl-2,2-dimethyl-3-hydroxypropionate, and so on. Alternatively hydroxyl terminated saturated or unsaturated polyester resins can be used; examples are unsaturated polyester (pre)polymers or oligomers, or mixtures thereof. Also mixtures of any of the compounds belonging to the group of G/P/HP-compounds can suitably be used.

The molar ratio of (HVE-compound) : (D/HIC-compound) : (G/P/HP-compound) as used in the context of the present invention is chosen to be approximately 2 : 2 : 1. By reacting the HVE-, D/HIC- and G/P/HP-compounds in about said ratio resins are obtained containing at least one vinyl ether group and at least two urethane groups.

In a preferred embodiment of the present invention, the resinous component with one or more vinyl ether group(s) is obtained from a reaction mixture wherein the first component is formed by a mixture of an HVE-compound and a hydroxylated (meth)acrylate (HA) compound. Suitable HA-compounds as can be used in the present invention are hydroxyethyl acrylate (HEA), hydroxyethyl methacrylate (HEMA) and hydroxypropyl methacrylate (HPMA).

For the reactions between the HVE-compound (and optionally the HA-compound), the D/HIC-compound and the G/P/HP-compound as necessary for the structural incorporation of the component with one or more vinyl ether group(s) into the resin, reaction conditions can be used as are well-known to the skilled man from the synthesis of vinyl ester resins or vinyl ester urethane resins, hereinafter referred to. Examples of suitable methods are described in the experimental part hereof. In addition reference is made to general literature such as "Chemistry and Technology of Isocyanates", H. Ulrich, Wiley & Sons, ISBN 0-471-96371-2, pages 347-403.

Also mixtures of the vinyl ethers of the general structure of formula 1 and of the resinous compounds (with the covalenly built-in monomeric components with one or more vinyl ether group(s)) may be used. This provides even better opportunities for fine-tuning the mortars to the specific application intended.

It is further noticed, that vinyl ether group(s) containing compounds may have a tendency to undergo some polymerisation reactions under acidic conditions. For that reason it is preferred, that all components for preparing the peroxide compositions according to the invention are selected in such way that the generation of an acidic medium is prevented.

In addition to the unsaturated prepolymer and the vinyl ether group(s) containing components as discussed hereinabove, the chemical mortars according to the invention may also contain one or more of the other monomers commonly used in resin compositions. The most common of such other monomers are styrene and (meth)acrylates. The group of the other monomers usually consists of monomers from the group of compounds that can react with the ethylenic unsaturation of the unsaturated prepolymer. Examples of such other monomers are vinylaromatic compounds, vinyl esters and vinyl nitriles. Examples are vinyl acetate, vinyl propionate, vinyl versatate, alpha-methyl styrene, p-methyl styrene, vinyl toluene and acrylic or methacrylic (hydroxy)esters of alcohols having 1 to 12 C atoms. It is in the context of the present invention also possible to use such other monomers having more than one unsaturation, for example butanediol di(meth)acrylate, divinyl benzene, diallyl phthalate, triallyl cyanurate or the diallyl and triallyl ethers of trimethylol propane.

The resin mortars according to the invention may also contain reinforcing or functional materials and/or fillers like quartz sand and/or flour, hollow and/or solid glass beads, mica, cements, calcium carbonate and/or sulfate, korund, carbides, metal particles, heavy spar, synthetic and/or natural fibers etc. It is also possible to add thixotropic agents such as fumed silica, silicic acids, layer silica (e.g. bentone) and/or pigments or colourants. The person skilled in the art will readily be able to determine which of these materials could be added to the resin composition according to the invention to obtain an even better result in fastening.

The invention also relates to two-component chemical fastening systems comprising such radically curable resin mortar (as discussed hereinbefore) and a B-component.

The B-component, as can be used in the context of the present invention, can be any B-component as is already known from the prior art and comprising a peroxide and an extender for said peroxide. As has been disclosed, for instance in DE-3226602-A1 or EP-A-0432087, various types of plasticiser may be used as extender. Also the peroxide content in the B-component may vary in a wide range.

The B-component, as can be used in the context of the present invention, can be any B-component as is already known from the prior art and comprising a peroxide and an extender for said peroxide. As has been disclosed, for instance in DE-3226602-A1 or EP-A-0432087, various types of plasticiser may be used as extender. Also the peroxide content in the B-component may vary in a wide range.

In particular, the two-component chemical fastening systems according to the present invention comprise a radically curable resin mortar according to the present invention (and discussed in detail hereinabove) as the A-component, and a B-component, in which the content of peroxide (i.e. the radical-forming substance in the B-component) is in the range of between 1.0 and 60 wt.% of the weight of the B-component.

The two-component chemical fastening systems according to the invention are usually cured, after mixing of the A- and B-components, with the aid of a peroxide (radical-forming system in the B-component) that is unstable in a broad temperature range from —80°C to +180, preferably from —30 to +110°C, most preferably from —25 to +50°C.

"Radical-forming system" is here understood to be a compound (in the B-component) that can act as a radical former, optionally in combination with an accelerator (in the A-component) and/or heat, up to temperature levels in the range of 110 to 180°C. It is of course also possible to use mixtures of radical-forming compounds and/or accelerators, respectively in the B- and A-components.

The peroxides, which can be used as the radical former in the peroxide compositions according to the present invention, may be selected from a wide range of peroxides. Most of these peroxides are commercially available. Preferably, the peroxide is selected from the group of acetylacetone peroxide, cyclohexanone peroxide, methylethylketone peroxide, dibenzoyl peroxide, alkylperoxides, all classes of hydroperoxides, percarbonates, perketals and inorganic peroxides. Apart from the ones already specifically mentioned before, examples of suitable peroxides are diacetyl peroxide, di-p-chlorobenzoyl peroxide, di-t-butyl peroxide, cumene hydroperoxide, phthaloyl peroxide, succinyl peroxide, dilauryl peroxide, acetylcyclohexanesulphonyl peroxide, t-butyl perbenzoate or t-butyl peroctoate, cyclohexane percarbonate, bis-(4-t-butylcyclohexyl) percarbonate, silicium peroxides, etc. Most preferred peroxides are the peroxides from the group of acetylacetone peroxide, cyclohexanone peroxide, methylethylketone peroxide and dibenzoyl peroxide. As meant herein, azo compounds als may be used instead of the peroxides, and are intended to be comprised within the meaning of the term "peroxides".

Preferably, the peroxides (in the B-component) are being initiated by an acelerator. Suitable accelerators (as will usually be present in the A-component and are well-known to the skilled man) are, for example, tertiary amines and/or metal salts, which - if they are present at all - can be present in the A-component in relatively small amounts, preferably in weight amounts of 0.01 to 10, preferably of 0.2 to 5, wt.% of the total weight of the A- and B-components. Suitable metal salts are, for example, cobalt octoate or cobalt naphthenoate;and vanadium, potassium, calcium, copper, manganese or zirconium carboxylates. Suitable amines are, for example, aniline derivatives and N,N-bisalkylaryl amines, such as N,N-dimethyl aniline, N,N-diethyl aniline, N,N-dimethyl p-toluidine, N,N-bis(hydroxyalkyl) aryl amine, N,N-bis(2-hydroxyethyl) aniline, N,N-bis(2-hydroxyethyl) toluidine, N,N-bis(2-hydroxypropyl)aniline, N,N-bis(2-hydroxypropyl) toluidine, N,N-bis(3-methacryloyl-2-hydroxypropyl)-p-toluidine, N,N-dibutoxy hydroxypropyl-p-toluidine and 4,4'-bis(dimethylamino)-diphenyl methane.

Accelerators which can also suitably be used are polymeric amines, for example, those obtained in polycondensation of N,N-bis(hydroxyalkyl) anilines with dicarboxylic acids or polyaddition of ethylene oxide to these amines.

In a preferred embodiment of the present invention, a vinyl ether component belonging to the same class as the vinyl ether reactive diluent in the A-component, is also present (as an extender) in the B-component. This ensures even better mixing of the A- and B-components. Moreover, this offers additional opportunities to the skilled man for adjusting the mixing ratio of the A- and B-components, most preferably in the range of from 3 : 1 to 1 : 1 (volume/volume). It is most preferred, that the reactive diluent used in the A-component and the extender used in the B-component are the same.

In the two-component-system according to the invention, the ratio between the A-component (comprising the unsaturated polyester, the reactive diluent, and optionally an accelerator and further additives and/or filers) and the B-component (comprising the initiator and the extender) is preferably in the range of 7 : 1 to 1 : 1 (volume/volume). More preferably this ratio is in the range of 3 : 1 to 1 : 1 (volume/volume). As has been mentioned before, each of the A- and B-components as such also may consist of more than one spatially separated component. The B-component may be prepared in situ or already be preformulated.

It may be advantageous, that the two-component systems according to the invention also, in one or both of the components, contain one or more other resin(s) functioning as a binder.

It is also noticed, that in the two-component fastening systems according to the invention also some peroxide may be present in the A-component. Of course, for proper functioning of the chemical fastening process and for being able to store the A-component for some time, the peroxide in the A-component then preferably should be present in encapsulated form. The initiating action of said peroxide then only will start after the mixing of the A- and B-components, if suitably arranged.

It should be noted that the patent literature (for instance in JP-A-09059329; EP-A-0322808; and US-A-5470897) various chemical mortar compositions are described which, in addition to an unsaturated polyester, also include a vinyl ether monomer. However, all of these references relate to resin compositions that are cured by means of ultraviolet radiation. Such curing is effective for the curing of thin layers on various surfaces, but cannot be used in chemical fastening techniques. In chemical fastening techniques the majority of the mixture of A- and B-components in the annular gap where the fastening has to occur is not accessable for light; hence UV-curing is impossible is such applications and there is no teaching in any of such documents that the resin compositions disclosed therein could suitably be used for chemical fastening.

In another reference, DE-3940138-A1, however, curable resin compositions are disclosed (also for use in chemical fastening), which are based on an unsaturated polyester and a compound that can polymerise therewith. Said compounds are thereby used for completely or partly replacing styrene. It is mentioned in said reference that specifically various esters (in wich one or more cycloaliphatic residual groups containing unsaturations must be present) are required for obtaining a good result. Although the specification of said patent also incidentally mentions that the residual group concerned may also be present in a molecule that also contains an allyl or vinyl ether group, the advantages of the use of such compounds are in no way evident.

It is further noticed, that the anonymous disclosure of RD 368046 discloses the reaction of vinyl ethers with unsaturated polyesters to corm copolymers. It is expressly stated therein that for optimum results an about exactly 1:1 ratio of the unsaturated polyester and the vinyl ether co-monomer is required, so that an alternating copolymer is obtained. Moreover, the compositions as disclosed in RD 368046 are aimed at totally different uses, namely for (hard, solvent resistant) coating (e.g. on aluminum) purposes. Curing occurs at about 50°C.

Also in EP-A-0028841 resin compositions are described containing vinyl ethers which are suitable for the production of mouldings via SMC or BMC techniques. As common curing temperatures are mentioned 95 to 180°C. The temperature range covered by the present invention is much broader, and more specifically and advantageously extends to very low temperatures.

Finally it should be noticed that Bevington et al. (Pure Appl. Chem., A37(6), 609-619 (2000)) have recently investigated the effects of vinyl ethers on the polymerisation of methyl methacrylate, styrene and acrylonitrile. The authors observed a clear reduction of the rate of polymerisation and of the chain lengths of the polymers formed. This is clearly teaching away from the present invention.

The invention also relates to methods of preparing radically curable resin mortars (as discussed hereinbefore) and a B-component, as well as to the use of such mortars, or two-component systems comprising such moratrs, in processes for chemical fastening.

According to the present invention, radically curable resin mortars, containing an unsaturated polyester and a reactive diluent, and optionally an accelerator, for use as the first component (A-component) in two-component (A-component + B-component) chemical fastening systems, are prepared by blending of an unsaturated polyester and a reactive diluent, which is selected from the groups of

* monomeric components containing one or more vinyl ether group(s) and having a structure according to formula 1 as indicated in claim 2, or
* resinous compounds, in which a monomeric component containing one or more vinyl ether group(s) has been built-in covalently by reaction of a mixture of appropriate amounts of a) an HVE-compound, b) a D/HIC-compound and c) a G/P/HP-compound as indicated in claim 5.

These radically curable resin mortars, or two-component chemical fastening systems, according to the invention, are used in processes for chemical fastening of construction elements in mineral and/or wooden based materials by appropriate mixing of the said A- and B-components and curing of the unsaturated polyester resins, vinyl ester resins, vinylurethane resins or hybrid resins from the A-component.

The invention will now be illustrated by means of the following examples and comparative examples, which by no means are intended to limit the scope of the invention in any way:

All examples (and comparative examples) were carried out by pre-mixing of the ingredients for each of the A- and B-components and adjusting the temperature of the A- and B-components to the temperature where the tests are being performed. Mixing of the A- and B-components then was done in a static mixer, thereby obtaining the curing mortars for testing both in the laboratory, respectively with anchor bolts inserted therein in the technical area.

General:

DSC tests:

The rest enthalpy (J/g) of cured material, an adequate indication for the degree of conversion, was calculated from results of Differential Scanning Calorimetry (Mettler, TOLEDO™ DSC 821, STAR system). The samples used were cast between 1-mm rims and mylar foil, and were cured with the curing system as indicated in the tables below. The heating profile for the dynamic run (25°C to 200°C) was 10°C/min. Integration of the peaks gives the amount of energy (in mJoules), which after dividing by the sample weight (in mg) gives the rest enthalpy (Rest $\Delta$H in J/g). (according to DIN 16945).

Assessments of properties of the resins were done by determining one or more of the following parameters, using techniques according to DIN 16945 (at 25°C in a thermostatted bath, statically, respectively in a well-defined test tube). Gelation time was measured by stirring the mortar until a significant increase of viscosity occurred, and surface cure was assessed by estimating the tackiness of the surface after one day of curing.

For measuring the fail load, the most important criterion in chemical fastening techniques, rock-bolts of hardened steel (class 10.9; 12 mm in diameter) were set in concrete (C20/25; bore-holes of 14 mm diameter, setting depth 130 mm). After one day at the given temperature the anchors were pulled out using a hydraulic tool while registering the required force for pulling-out the anchor.

Abbreviations used:

| | |
|---|---|
| BDDMA | 1,4-butanedioldimethacrylate |
| DIPPT | Diisopropoxy para-toluidine (an amine accelerator) |
| DPG | Dipropylene glycol |
| HBUVE | Hydroxybutyl vinyl ether |
| HPMA | Hydroxypropyl methacrylate |
| Luci20 | Lucipal 20, a product of AKZO Nobel, which contains 20 wt.% of dibenzoyl peroxide in calcium carbonate |
| MDI | diphenylmethane diisocyanate |
| Perox50 | Peroxan BP 50 SE, a product of Pergan, which contains 50 wt.% of dibenzoyl peroxide |
| TEGDVE | Triethyleneglycol divinyl ether |
| Tempol | 4-Hydroxy-2,2,6,6-tetramethylpiperidine-N-oxyl (an inhibitor) and: |
| Gel t | *gelation time:* time associated with interval 25-35°C in minutes (until significant increase of viscosity) |
| Surf. cure. | Relative Assessment of surface cure properties by comparing dryness of the set surface and tackiness of the surface (++ is better than +) after one day of curing |

The following resins (and comparative resins) were used in the examples (and comparative examples):

Vinyl ester urethane resin A:

500 g of MDI was added to a stirred reactor and was reacted gradually with 134 g of DPG, under the influence of 0,15 wt.% of dibutyltin laurate as catalyst. The temperature was allowed to reach a maximum of 55 °C. Then 288 g of HPMA was added gradually and was reacted while the temperature was allowed to reach 99 °C. The molar ratio of HPMA : MDI : DPG is 2 :2 : 1. Resin A was so obtained.

Vinyl ether urethane resin B:

500 g of MDI (diphenylmethane diisocyanate) was added to a stirred reactor and was reacted gradually with 134 g of dipropylene glycol (DPG), under the influence of 0,15 wt.% of dibutyltin laurate as catalyst. The temperature was allowed to reach a maximum of 55 °C. Then 232 g of hydroxybutyl vinyl ether (HBUVE) was added gradually and was reacted while the temperature was allowed to reach 99 °C. Resin B was so obtained. The molar ratio of HBUVE : MDI : DPG is 2:2:1.

Resin C: Palatal P6-01, a commercially available resin of DSM Composite Resins.

The experiments are summarised in the following Tables I, II and III (all amounts being shown as wt.%).

Table I shows mechanical results of chemical fastening tests for filled mortars according to the invention as compared with chemical fastening with a prior art resin (vinyl ester urethane). It can be seen that superior properties are being achieved. Especially at low temperature excellent pull-out values are observed for the resin mortars according to the invention. Also gelation times are good. In all experiments according to the invention improved surface cure was observed.

Table II shows gelation time and curing results of chemical fastening tests for mortars according to the invention without fillers, and with a different curing agent, as compared with chemical fastening with a prior art resin (vinyl ester urethane). Again, gelation times and rest enthalpy are found to be very good for the resin mortars according to the invention.

Table III shows for gelation time and curing results of chemical fastening tests for mortars according to the invention, all with monomeric vinyl ethers added, but without fillers, as compared with chemical fastening using systems not containing vinyl ether groups. Gelation times are much better for the resin mortars according to the invention, and curing is improved.

Table I

| | Comp. Example A (reference) | Example 1.1 | Example 1.2 | Example 1.3 |
|---|---|---|---|---|
| Resin A | 46 | 37 | 28 | 46 |
| Resin B | | 9 | 17 | |

Table I   (continued)

|  | Comp. Example A (reference) | Example 1.1 | Example 1.2 | Example 1.3 |
|---|---|---|---|---|
| BDDMA | 26 | 26 | 26 | 16 |
| HPMA | 28 | 28 | 28 | 28 |
| TEGDVE |  |  |  | 10 |
| Perox50 | 12.9 | 12.9 | 12.9 | 12.9 |
| DIPPT | 1.7 | 1.7 | 1.7 | 1.7 |
| Tempol | 0.45 | 0.45 | 0.45 | 0.45 |
| Fumed silica | 7,7 | 7,7 | 7,7 | 7,7 |
| Quartz sand | 104.9 | 104.9 | 104.9 | 104.9 |
| Quartz flour | 30.3 | 30.3 | 30.3 | 30.3 |
|  |  |  |  |  |
| Gel time At 25°C [min] | 7:30 | 6:25 | 6:40 | 6:00 |
| Surf. cure | - | + | ++ | ++ |
| Fail load at +25°C [kN] | 78 | 92 | 92 | 91 |
| Fail load at -5°C [kN] | 56 | 77 | 73 | 71 |
| Fail load at -15°C [kN] | 7 | 42 | 61 | 30 |

Table II

|  | Comp. Ex. B | Example 2.1 | Example 2.2 |
|---|---|---|---|
| Resin A | 46 | 37 | 28 |
| Resin B | 0 | 9 | 17 |
| BDDMA | 26 | 26 | 26 |
| HPMA | 35 | 35 | 35 |
| Luci20 | 10 | 10 | 10 |
| DIPPT | 0.74 | 0.74 | 0.74 |
| Tempol | 0.75 | 0.75 | 0.75 |
|  |  |  |  |
| Gel time at 25°C [min] | 3:10 | 2:50 | 3:10 |
| Surf. cure | - | + | ++ |
| Rest enthalpy [J/g] | -31 | -23 | -17 |

Table III

| | COMP. Ex. C | Ex. 3.1 | Ex. 3.2 | COMP. Ex. D | Ex. 3.3 | Ex. 3.4 |
|---|---|---|---|---|---|---|
| Resin A | 28.2 | 28.2 | 28.2 | | | |
| Resin C | | | | 28.2 | 28.2 | 28.2 |
| BDDMA | 46.7 | 37.5 | 28.2 | 46.7 | 37.5 | 28.2 |
| TEGDVE | | 9.4 | 18.8 | | 9.4 | 18.8 |
| Luci20 | 23.5 | 23,46 | 23,46 | 23,46 | 23,46 | 23,46 |
| DIPPT | 1.3 | 1.3 | 1.3 | 1.3 | 1.3 | 1.3 |
| Tempol | 0.15 | 0.15 | 0.15 | 0.15 | 0.15 | 0.15 |
| Gel time at 25 °C [min] | 6:35 | 3:25 | 1:00 | 5:00 | 4:20 | 3:10 |

**Claims**

1. Radically curable resin mortar, containing an unsaturated polyester and a reactive diluent, and optionally an accelerator, for use as the first component (A-component) in two-component (A-component + B-component) chemical fastening systems, the B-component containing a peroxide and possibly an extender for the peroxide, **characterised in that** the reactive diluent for the unsaturated polyester in the A-component is

   * a monomeric component containing one or more vinyl ether group(s) and having a structure according to formula 1

$$(A\text{-}CH=CH\text{-}O)_n\text{-}R \hspace{3cm} \text{(formula 1)}$$

   * or is a suitable resinous compound, in which a monomeric component containing one or more vinyl ether group (s) has been built-in covalently,

   and the content of the component containing one or more vinyl ether group(s) being from 0.5 to 50 wt.%, calculated as the weight percentage of said monomeric component relative to the total weight of the resin composition (sum of weights of A-component + B-component, excluding the weight of additives, fillers and the like).

2. Radically curable resin mortar according to claim 1, **characterised in that** the component containing one or more vinyl ether group(s) is a monomer of the structure

$$(A\text{-}CH=CH\text{-}O)_n\text{-}R \hspace{3cm} \text{(formula 1)}$$

   where

   A    represents hydrogen or an alkyl group with 1-3 C atoms, and where, if there is more than one A, the individual A groups may be the same or different

   R    either represents an aliphatic group, optionally branched, with 1-20 C atoms, which may also contain a cyclohexyl or a 1,4-dimethylenecyclohexyl group and in the carbon chain optionally also one or more O and/or S atoms, which group may be substituted with one or more functional group(s) chosen from either a hydroxyl group or an amino group, optionally substituted with one or two alkyl groups with 1-3 C atoms, or represents a polyethylene glycol or a polypropylene glycol with an average chain length of between 2 and 10 glycol units, optionally with an aliphatic group with 1-5 C atoms attached to the chain's free hydroxyl group; and

   n    is 1, 2, 3 or 4.

3. Radically curable resin mortar according to claim 1 or 2, **characterised in that** the monomeric component containing one or more vinyl ether group(s) is selected from the group of mono- or divinyl ether monomers.

4. Radically curable resin mortar according to claim 3, **characterised in that** the component containing one or more vinyl ether group(s) is selected from the group of hydroxybutyl vinyl ether (HBUVE), diethyleneglycol divinyl ether (DEGDVE) or triethyleneglycol divinyl ether (TEGDVE).

5. Radically curable resin mortar according to claim 1, **characterised in that** the resinous compound, in which a monomeric component containing one or more vinyl ether group(s) has been built-in covalently, has been obtained by reaction of a mixture of appropriate amounts of:

   a) a first compound (the HVE-compound) containing at least one hydroxyl group and at least one vinyl ether group, and
   b) a second compound (the D/HIC-compound), being a diisocyanate (or higher isocyanate), reacting with formation of one or more urethane group(s), and
   c) a third compound (the G/P/HP-compound) chosen from the groups of (1) $C_{2-6}$ glycols, (2) $C_{5-20}$ polyols having 2-5 hydroxyl groups and (3) saturated or (ethylenically) unsaturated hydroxyl terminated polyester compounds, not being alkyd resins, having 1-5 free hydroxyl groups and from 2-50 monomeric ester units (the G/P/HP-compound), or mixtures thereof,

the content of vinyl ether groups in the resinous compound being from 0.5 to 50 wt.%, calculated as the weight percentage of the HVE-compound relative to the total weight of said resinous compound.

6. Radically curable resin mortar according to any of claims 1 to 5, **characterised in that** the reactive diluent is a mixture of one or more components having one or more vinyl ether group(s).

7. Two-component chemical fastening system comprising a radically curable resin mortar according to any of claims according to any of claims 1 to 6 as the A-component, and a B-component, **characterised in that** the content of peroxide in the B-component is in the range of between 1.0 and 60 wt.%.

8. Two-component chemical fastening system according to claim 7, **characterised in that** the peroxide in the B-component is selected from the group of acetylacetone peroxide, cyclohexanone peroxide, methylethylketone peroxide, and di-benzoyl peroxide.

9. Two-component chemical fastening system according to any of claims 7 or 8, **characterised in that** a vinyl ether component belonging to the same class as the reactive diluent in the A-component is also present as an extender in the B-component.

10. Two-component chemical fastening system according to claim 10, **characterised in that** the extender in the B-component is the same as the vinyl ether component used as the reactive diluent for the unsaturated polyester resin in the A-component.

11. Two-component chemical fastening system according to any of claims 7 to 10, **characterised in that** the ratio between the A-component and the B-component is in the range of 7 : 1 to 1 : 1, preferably in the range of 3 : 1 to 1 : 1 (vol/vol).

12. Method for preparing a radically curable resin mortar, containing an unsaturated polyester and a reactive diluent, and optionally an accelerator, for use as the first component (A-component) in two-component (A-component + B-component) chemical fastening systems, **characterised in that** the A-component is prepared by blending of an unsaturated polyester and a reactive diluent, which is selected from the groups of

   * monomeric components containing one or more vinyl ether group(s) and having a structure according to formula 1 as indicated in claim 2, or
   * resinous compounds, in which a monomeric component containing one or more vinyl ether group(s) has been built-in covalently by reaction of a mixture of appropriate amounts of a) an HVE-compound, b) a D/HIC-compound and c) a G/P/HP-compound as indicated in claim 5.

13. Use of a radically curable resin mortar according to any one of claims 1-6 or prepared according to claim 12, or of a two-component chemical fastening system according to any one of claims 7-11, in processes for chemical fastening of construction elements in mineral and/or wooden based materials by appropriate mixing of the said A- and B-components and curing of the unsaturated polyester resins, vinyl ester resins, vinylurethane resins or hybrid resins from the A-component.

**European Patent Office**

## EUROPEAN SEARCH REPORT

Application Number

EP 00 20 4736

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 028 841 A (UNION CARBIDE CORP) 20 May 1981 (1981-05-20) * examples 2,3 * | 1-3,6, 9-12 | C08F283/00 |
| X | * page 7, line 1 - page 7, line 12 * | 7,8 | |
| X | US 5 470 897 A (MEIXNER JUERGEN ET AL) 28 November 1995 (1995-11-28) * column 3, line 26 - column 4, line 40; claim 1 * | 1-3 | |
| X | US 3 721 722 A (BAUM M) 20 March 1973 (1973-03-20) * column 4, line 12 - column 5, line 6; examples 1,2 * | 1-3 | |
| X,D | NIPPON SYNTHETIC CHEM IND CO: "CURABLE RESIN COMPSN. WITH RAPID CURABILITY FOR SEALANT OR ADHESIVE - COMPRISES UNSATD. POLYESTER RESIN. VINYL ETHER MONOMER AND RADICAL-FORMING POLYMERISATION INITIATOR FOR IMPROVED CURED FILM PROPERTIES" , DOCUMENTATION ABSTRACTS JOURNAL A. PLASTICS, POLYMERS,DERWENT PUBLICATIONS, LONDON,GB, VOL. 19, NR. 97 XP002073712 * the whole document * | 1-3 | TECHNICAL FIELDS SEARCHED (Int.Cl.7)<br><br>C08F<br>C08L<br>C09J |

The present search report has been drawn up for all claims

| Place of search | Date of completion of the search | Examiner |
|---|---|---|
| MUNICH | 28 May 2001 | Rouault, Y |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**European Patent Office**

**LACK OF UNITY OF INVENTION**
**SHEET B**

Application Number

EP 00 20 4736

The Search Division considers that the present European patent application does not comply with the requirements of unity of invention and relates to several inventions or groups of inventions, namely:

1. Claims: 1 (part),2,3,6-12

   A radically curable resin containing an unsaturated polyester and a reactive diluent for use as the first component (A-component) in two (A+B) component chemical fastening system, the B component containing a peroxide, characterised in that the reactive diluent for the unsaturated polyster in the A component is a monomeric component containing one or more vinyl ether group(s).

2. Claims: 1 (part), 2-12

   A radically curable resin containing an unsaturated polyester and a reactive diluent for use as the first component (A-component) in two (A+B) component chemical fastening system, the B component containing a peroxide, characterised in that the reactive diluent for the unsaturated polyster in the A component is a suitable resinous compound, in which a monomeric component containing one or more vinyl group(s) has been built-in covalently.

3. Claim : 13

   Use of a resin mortar according to any one of claims 1-6

EP 1 217 017 A1

## ANNEX TO THE EUROPEAN SEARCH REPORT
## ON EUROPEAN PATENT APPLICATION NO.

EP 00 20 4736

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2001

| Patent document cited in search report | | Publication date | Patent family member(s) | | Publication date |
|---|---|---|---|---|---|
| EP 0028841 | A | 20-05-1981 | US 4374215 A | | 15-02-1983 |
| | | | AT 17362 T | | 15-01-1986 |
| | | | AU 550879 B | | 10-04-1986 |
| | | | AU 6427280 A | | 21-05-1981 |
| | | | CA 1151794 A | | 09-08-1983 |
| | | | DE 3071344 D | | 20-02-1986 |
| | | | JP 1408353 C | | 27-10-1987 |
| | | | JP 56152820 A | | 26-11-1981 |
| | | | JP 62009262 B | | 27-02-1987 |
| | | | ES 504531 D | | 16-05-1982 |
| | | | ES 8204452 A | | 01-08-1982 |
| US 5470897 | A | 28-11-1995 | DE 4314866 A | | 10-11-1994 |
| | | | AT 182607 T | | 15-08-1999 |
| | | | AU 666262 B | | 01-02-1996 |
| | | | AU 6056094 A | | 10-11-1994 |
| | | | CA 2122504 A | | 06-11-1994 |
| | | | CZ 9401099 A | | 16-11-1994 |
| | | | DE 59408532 D | | 02-09-1999 |
| | | | DK 623660 T | | 06-03-2000 |
| | | | EP 0623660 A | | 09-11-1994 |
| | | | ES 2136136 T | | 16-11-1999 |
| | | | FI 942030 A | | 06-11-1994 |
| | | | GR 3031422 T | | 31-01-2000 |
| | | | JP 7003203 A | | 06-01-1995 |
| | | | SK 51494 A | | 09-11-1994 |
| | | | ZA 9403072 A | | 13-01-1995 |
| US 3721722 | A | 20-03-1973 | NONE | | |

EPO FORM P0459

For more details about this annex : see Official Journal of the European Patent Office, No. 12/82

15